# FASCICULE DE BREVET EUROPEEN

(11) **EP 3 542 688 B1**
(45) Date de publication et mention de la délivrance du brevet: **10.05.2023**
(21) Numéro de dépôt: 19161734.9
(22) Date de dépôt: 08.03.2019
(51) Int. Cl.: B01F 27/00, A47J 43/07

(54) **ACCESSOIRE BATTEUR POUR UN APPAREIL ÉLECTROMÉNAGER DE PRÉPARATION CULINAIRE, ADAPTÉ AU MELANGE DE FAIBLES QUANTITÉS DE PRÉPARATION ALIMENTAIRE**
ZUBEHÖR FÜR KULINARISCHES GERÄT ZUM MISCHEN VON NIEDRIGEN MENGEN VON NAHRUNGSMITTELZUBEREITUNG
FOOD-PROCESSING TOOL FOR A KITCHEN APPLIANCE SUITABLE FOR MIXING LOW QUANTITIES OF FOOD PREPARATION

(30) Priorité: 23.03.2018 FR 1852564
(43) Date de publication de la demande: 25.09.2019
(73) Titulaire: SEB S.A., 69130 Ecully (FR)
(72) Inventeur: LE GRAND, Olivier, 21380 MESSIGNY ET VANTOUX (FR); NESPOUX, Johan, 53640 LE HORPS (FR); ROCHE, Anne-Estelle, 53440 MARCILLE LA VILLE (FR)
(74) Mandataire: SEB Développement

(56) Documents cités:
- WO-A1-86/03112
- WO-A2-2011/080646
- CN-U- 202 277 265
- DE-B- 1 196 164
- DE-U1-202009 006 852
- GB-A- 2 519 805

## Description

### Domaine technique

La présente invention concerne le domaine des appareils électroménagers de préparation culinaire et porte tout particulièrement sur un accessoire batteur utilisé sur un tel appareil pour permettre le brassage et l'émulsion des ingrédients composant la préparation culinaire, lesdits ingrédients étant versés dans un récipient dans lequel est disposé l'accessoire batteur.

L'invention vise à concevoir un accessoire batteur facilitant le brassage et l'émulsion de la préparation culinaire, quelle que soit la quantité de celle-ci disposée dans le récipient.

### Etat de la technique

Un appareil électroménager de préparation culinaire comprend traditionnellement un corps qui réceptionne un récipient se présentant par exemple sous la forme d'un bol. Un moteur est agencé à l'intérieur du corps et entraîne en rotation un arbre d'entraînement. Cet arbre d'entraînement vient soit se loger en saillie dans le fond du récipient positionné sur ce corps, soit s'accoupler à un arbre de transmission disposé en saillie dans le fond du récipient.

Un tel appareil électroménager comprend généralement plusieurs accessoires conçus chacun pour remplir une fonction et pour venir se loger dans le fond du récipient, en prise avec l'arbre d'entrainement ou avec l'arbre de transmission, la rotation de ce dernier permettant celle de l'accessoire.

Parmi ces accessoires, l'un d'entre eux consiste en un accessoire batteur, conçu pour permettre le brassage et l'émulsion des ingrédients versés dans le récipient afin d'obtenir une préparation culinaire, par exemple une pâte à gâteau, une meringue, etc.

Il est connu les titres suivants divulguant diverses mises en oeuvre d'un accessoire batteur présentant certaines caractéristiques comparables à celles objets de l'invention : US2072691 ; GB667863 ; FR2282932A1 ; FR2773698B1 ; EP2326226B1 ; WO201180646A2 ; CN202277265U. L'accessoire batteur comprend une pièce d'entraînement munie d'un premier axe de rotation et un ou deux fouets montés libre en rotation sur la pièce d'entraînement selon un ou deux seconds axes de rotation excentrés par rapport au premier axe de rotation, grâce à des moyens de rotation agencés entre la pièce d'entraînement et le ou les fouets. Chaque fouet comprend des brins, voire des pales. L'excentration de l'axe secondaire du fouet et le frottement des brins avec les ingrédients durant la rotation de la pièce d'entraînement selon le premier axe de rotation permet audit fouet d'entrer en rotation selon le second axe de rotation, créant ainsi une trajectoire épicycloïdale des brins. Cette trajectoire implique une diminution des projections et une meilleure incorporation d'air durant le brassage des ingrédients.

Selon les titres US2072691, GB667863, WO201180646A2 et CN202277265U, la pièce d'entraînement comprend un corps s'étendant selon le premier axe de rotation, une traverse inférieure et une traverse supérieure, les traverses s'étendant radialement sur le corps. Chaque fouet est monté en liaison pivot entre la traverse inférieure et la traverse supérieure. Ces conceptions ne permettent pas un mélange convenable de la préparation alimentaire lorsqu'une faible quantité seulement de celle-ci est disposée dans le récipient.

Les conceptions d'accessoires batteurs décrites dans les titres FR2282932A1 ; FR2773698B1 et EP2326226B1 permettent un meilleur mélange d'une faible quantité de préparation alimentaire. Pour cela, la pièce d'entraînement comprend un corps s'étendant selon le premier axe de rotation et une traverse supérieure s'étendant radialement sur le corps. Chaque fouet est monté en liaison pivot sous la traverse supérieure, ce qui permet au fouet d'être positionné plus proche du fond du récipient et, ainsi, de brasser de plus faibles quantités de préparations alimentaires.

### Résumé de l'invention

La présente invention a pour objet de concevoir une alternative d'accessoire batteur qui permette le mélange d'une faible quantité de préparation alimentaire.

A cet effet, l'invention concerne un accessoire batteur pour un appareil électroménager de préparation culinaire. L'accessoire batteur comprend une pièce d'entraînement munie d'un premier axe de rotation et d'au moins un bras. L'accessoire batteur comprend au moins un fouet, le ou chaque fouet étant monté libre en rotation sur le ou sur l'un des bras selon un second axe de rotation excentré par rapport au premier axe de rotation. Ce montage libre en rotation est mis en oeuvre grâce à des moyens de rotation agencés entre la pièce d'entraînement et le fouet. Le ou l'un au moins des fouet(s), de préférence le ou chaque fouet, comprend une base munie de moyens de mélange évoluant au-dessus et à distance dudit au moins un bras lors de la rotation dudit au moins un fouet.

Selon l'invention, la base est au moins partiellement annulaire, et les moyens de mélange comprennent des ondulations réparties autour et/ou en-dessous de la base, pour favoriser le brassage et l'émulsion d'une faible quantité de préparation alimentaire. Cela permet d'optimiser le travail du fouet avec des petites proportions de préparations alimentaires. On entend par faibles quantités de préparations alimentaires, des quantités de préparations alimentaires qui ne dépassent pas le cinquième de la hauteur du fouet lorsque l'accessoire batteur est en position dans le récipient.

Ainsi, l'accessoire batteur selon l'invention met en oeuvre une base qui comporte des moyens de mélange, lesquels sont complémentaires aux éléments de mélange traditionnels présents sur le fouet, tels que des brins, des ailettes ou des pales. La base du fouet est au plus proche du fond du récipient de l'appareil électroménager de préparation culinaire, lorsque l'accessoire batteur est en place dans ledit récipient, le bras étant positionné entre le fond du récipient et ladite base. La présence des moyens de mélange sur cette base favorise donc le brassage lorsque les éléments de mélange du fouet - qui s'étend vers le haut au-dessus de la base - sont légèrement plongés dans la préparation alimentaire, disposée en faible quantité dans le récipient.

Si désiré, les moyens de mélange sont constitués d'ondulations réparties autour et/ou en-dessous de la base. On pourrait envisager d'autres conceptions de moyens de mélange, par exemple des mini-pales disposées radialement autour de la base.

Selon une conception de l'accessoire batteur, celui-ci comprend deux fouets montés libres en rotation respectivement sur deux bras de la pièce d'entraînement selon deux seconds axes de rotation respectifs. Ainsi l'accessoire batteur comprend deux fouets et la pièce d'entraînement est munie de deux bras, chacun des fouets étant respectivement monté libre en rotation sur l'un des bras selon l'un des seconds axes de rotation.

De préférence, les deux fouets sont disposés symétriquement l'un par rapport à l'autre, vis-à-vis du premier axe de rotation. On pourrait envisager une autre variante selon laquelle les deux fouets seraient montés sur la pièce d'entraînement, chacun d'un côté vis-à-vis du premier axe de rotation, les deux seconds axes de rotation n'étant pas équidistants du premier axe de rotation. On pourrait aussi envisager une autre variante selon laquelle plusieurs fouets seraient montés sur la pièce d'entraînement, à distance et autour du premier axe de rotation. On pourrait aussi envisager une autre variante avec un seul fouet monté libre en rotation sur un seul bras de la pièce d'entraînement selon un second axe de rotation.

Selon une conception de l'accessoire batteur, la pièce d'entraînement comprend un corps agencé selon le premier axe de rotation, et le ou les bras s'étendent radialement vis-à-vis du corps. En la présence d'un seul fouet, un seul bras est prévu. En la présence de deux fouets, deux bras sont disposés radialement vis-à-vis du corps et en opposition l'un par rapport à l'autre, deux arbres s'étendant vers le haut respectivement sur les deux bras. Selon la taille du récipient de travail utilisé, jusqu'à huit fouets pourraient être répartis autour du premier axe de rotation. Des réalisations comportant deux ou trois fouets sont toutefois préférées pour des questions de coût, d'efficacité de fonctionnement, et de simplicité de manipulation.

De préférence, selon cette conception, le ou l'un au moins des bras, de préférence chacun des bras, comprend un racloir disposé du côté amont de la base par rapport au sens de rotation de la pièce d'entraînement. Ce racloir permet de décoller les ingrédients présents dans le fond du récipient afin qu'ils soient également brassés par le fouet.

De préférence, selon cette conception, le corps comprend une forme en cloche creuse s'étendant vers le haut selon le premier axe de rotation. Cette forme permet de saisir facilement l'accessoire batteur positionné dans le récipient.

Selon cette conception, le corps comprend des moyens d'accouplement. Ces moyens d'accouplement sont destinés à coopérer avec un dispositif d'entraînement sur le corps de l'appareil électroménager de préparation culinaire.

Selon une conception de l'accessoire batteur, le ou chaque fouet comprend des brins répartis autour dudit fouet et se terminant en partie inférieure par la base munie des moyens de mélange. On pourrait envisager d'autres conceptions de fouets en remplaçant les brins par des pales ou des ailettes qui se terminent en partie inférieure par la base munie des moyens de mélange.

Selon une conception de l'accessoire batteur, la pièce d'entraînement comprend au moins un arbre s'étendant selon le ou l'un des second(s) axe(s) de rotation, et le ou chaque fouet comprend un moyeu monté libre en rotation sur le ou sur l'un des arbre(s), le moyeu comportant ladite base. Le ou chaque arbre s'étend vers le haut sur le ou sur l'un des bras. Un dispositif de maintien est agencé entre le ou chaque fouet et le ou chaque arbre respectif. Ce dispositif de maintien est configuré pour bloquer en translation, selon le second axe de rotation, le moyeu monté libre en rotation sur le ou sur l'un des arbre(s), au moins lorsque le moyeu tourne selon un premier sens de rotation, et pour autoriser le retrait du fouet de l'arbre lorsque le fouet est manipulé d'une manière définie par rapport à l'arbre. Cette mise en oeuvre facilite le montage et le démontage du ou des fouet(s) vis-à-vis de la pièce d'entraînement, pour le nettoyage.

Selon une première conception du dispositif de maintien, celui-ci comprend :
- un élément de butée agencé sur la pièce d'entraînement pour bloquer la translation du moyeu dans un premier sens selon le second axe de rotation,
- une gorge agencée sur l'arbre,
- une gorge interne agencée sur le moyeu,
- et une rondelle élastique s'engageant dans la gorge et formant un élément de blocage de la translation du moyeu dans un second sens selon ce second axe de rotation, une fois en position dans la gorge interne.

Ainsi l'utilisateur peut dégager le fouet de la pièce d'entraînement en exerçant une traction selon la direction du second axe de rotation vers l'extrémité libre de l'arbre, et mettre en place le fouet sur la pièce d'entraînement avec un mouvement en sens inverse.

Selon une seconde conception du dispositif de maintien, celui-ci comprend :
- une tête et une gorge agencées sur l'arbre, la gorge étant positionnée sous la tête, ladite tête comprenant au moins une rainure hélicoïdale débouchant d'un côté sur la gorge et de l'autre sur une extrémité supérieure de l'arbre,
- au moins un plot agencé à l'intérieur du moyeu et configuré pour pénétrer dans l'au moins une rainure hélicoïdale et venir se loger dans la gorge lors de la mise en place du moyeu sur l'arbre.

Ainsi l'utilisateur peut dégager le fouet de la pièce d'entraînement en engageant le ou les plots dans la ou les rainures hélicoïdales, selon le premier sens de rotation ; lorsque le fouet est tourné dans le second sens de rotation opposé au premier sens de rotation le fouet ne peut être dégagé de la pièce d'entraînement

De préférence, selon cette seconde conception, le dispositif de maintien comprend deux rainures hélicoïdales et deux plots, les plots s'engageant respectivement dans les rainures hélicoïdales pour venir se loger dans la gorge.

Ainsi, selon cette seconde conception du dispositif de maintien, seule une position particulière du moyeu vis-à-vis de l'arbre permet de monter ou de démonter le fouet de la pièce d'entraînement.

L'invention concerne également un appareil électroménager de préparation culinaire, lequel comprend un récipient muni d'un dispositif d'entraînement en rotation et un accessoire batteur présentant l'une et/ou l'autre des caractéristiques précitées. L'accessoire batteur est apte à être logé dans le récipient et accouplé avec le dispositif d'entraînement en rotation, selon le premier axe de rotation.

L'invention concerne également un appareil électroménager de préparation culinaire comprenant un dispositif d'entraînement en rotation, un récipient de travail et un accessoire batteur apte à être entraîné en rotation dans le récipient de travail par le dispositif d'entraînement en rotation, du fait que l'accessoire batteur est conforme à l'une au moins des caractéristiques précitées et que l'accessoire batteur est apte à être entraîné en rotation dans le récipient de travail par le dispositif d'entraînement en rotation selon le premier axe de rotation.

### Brève description des figures

La description suivante met en évidence les caractéristiques et avantages de la présente invention. Cette description s'appuie sur des figures, parmi lesquelles :
- La figure 1 illustre une vue d'ensemble d'un accessoire batteur selon un premier mode de conception ;
- La figure 2 illustre une vue de face, en coupe, de l'accessoire batteur de la figure 1 ;
- Les figures 3 et 4 illustrent une conception du fouet selon ce premier mode de conception de l'accessoire batteur ;
- Les figures 5 et 6 illustrent une conception de la pièce d'entraînement selon ce premier mode de conception de l'accessoire batteur ;
- La figure 7 illustre en coupe le fouet positionné sur l'arbre de la pièce d'entraînement, selon ce premier mode de conception de l'accessoire batteur ;
- La figure 8 met en évidence des moyens d'accouplement sur la pièce d'entraînement ;
- La figure 9 met en évidence une base munie de moyens de mélange, sur le fouet ;
- La figure 10 illustre une vue d'ensemble d'un accessoire batteur selon un second mode de conception ;
- La figure 11 illustre une vue en coupe de face de l'accessoire batteur de la figure 10 ;
- La figure 12 met en évidence la présence d'une rondelle élastique sur une gorge d'un arbre de la pièce d'entraînement selon le second mode de conception ;
- La figure 13 illustre la pièce d'entraînement selon ce second mode de conception de l'accessoire batteur ;
- La figure 14 illustre en coupe le fouet selon ce second mode de conception de l'accessoire batteur.

### Description détaillée

Dans la suite de la description, les mêmes références sont utilisées pour désigner les mêmes caractéristiques selon les diverses variantes de réalisation, sauf indication. En outre, le terme appareil est utilisé pour désigner un appareil électroménager de préparation culinaire qui est équipé d'un accessoire batteur selon l'invention.

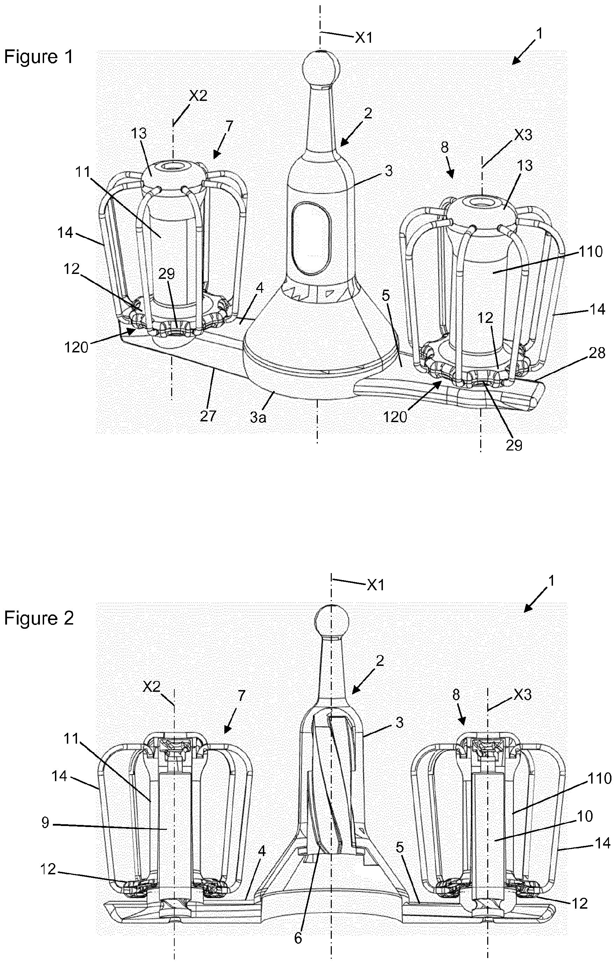

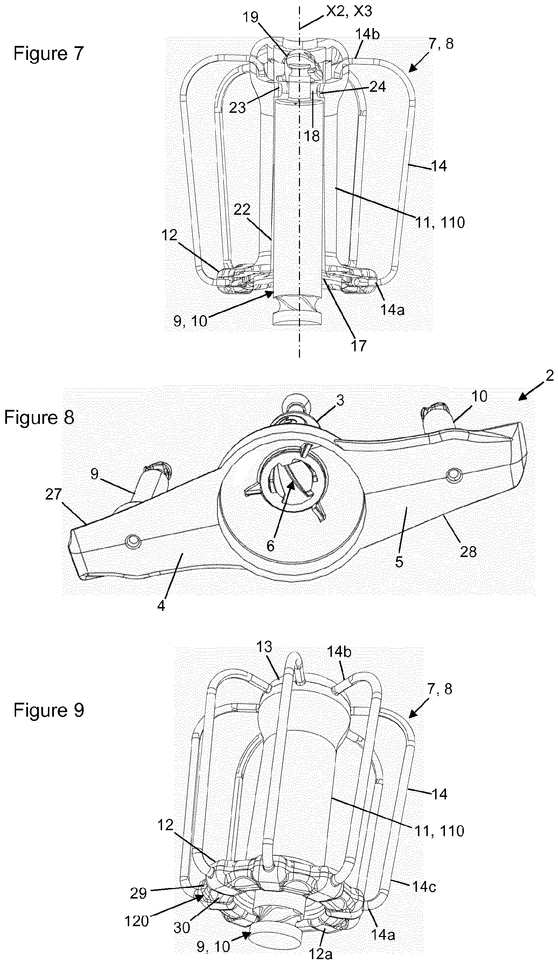

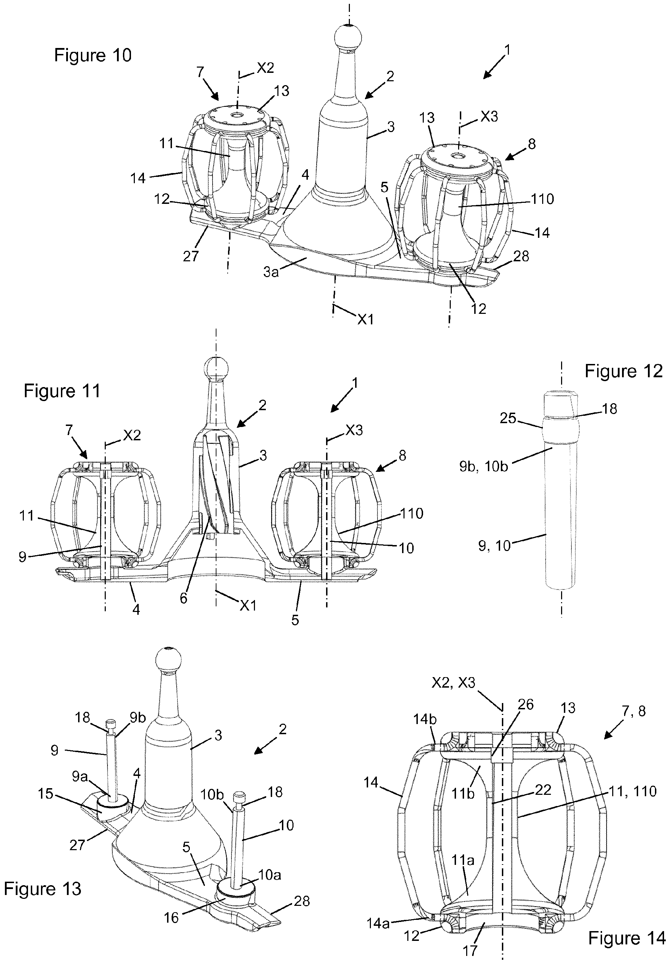

Sur les deux variantes illustrées en figures 1 et 10, l'accessoire batteur 1 comprend une pièce d'entraînement 2 qui comporte un corps 3 présentant plus ou moins une forme de cloche creuse, ce corps 3 étant disposé selon un premier axe X1. La pièce d'entraînement est entraînée en rotation selon ce premier axe X1. La pièce d'entraînement 2 comporte également deux bras 4, 5 qui prolongent radialement le corps 3 dans sa partie inférieure 3a, ces deux bras 4, 5 étant disposés symétriquement l'un par rapport à l'autre, vis-à-vis du premier axe X1. Le corps 3 est creux et comprend dans sa partie interne des moyens d'accouplement formés par des dents 6, comme l'illustrent les deux variantes de l'accessoire batteur 1 en figures 2 et 11. Ces dents 6 sont également illustrées sur la figure 8, pour la première variante de l'accessoire batteur 1.

L'accessoire batteur 1 est destiné à être placé dans un récipient d'un appareil (non illustré). Les caractéristiques d'un tel appareil sont bien connues de l'homme du métier, raison pour laquelle elles ne seront pas détaillées. L'appareil comprend traditionnellement un corps qui incorpore un dispositif d'entraînement en rotation, lequel comporte notamment un moteur entraînant en rotation un arbre d'entraînement, cet arbre d'entraînement faisant saillie en partie supérieure du corps. L'appareil comprend également un récipient, par exemple sous la forme d'un bol, lequel est apte à être engagé sur la partie supérieure du corps, position dans laquelle l'arbre d'entraînement pénètre par le fond du récipient. Cet arbre d'entraînement comprend des dents complémentaires aux dents 6 à l'intérieur du corps 3 de l'accessoire batteur 1, de sorte que l'arbre d'entraînement engrène avec la pièce d'entraînement 2 lorsque l'accessoire batteur 1 est placé dans le récipient. La rotation du moteur entraîne alors celle de la pièce d'entraînement 2 selon le premier axe X1. On peut également envisager qu'un arbre de transmission soit agencé en saillie dans le fond du récipient, cet arbre de transmission étant accouplé à l'arbre d'entraînement une fois le récipient en position sur le corps de l'appareil. Dans ce cas, l'arbre de transmission comporte lesdites dents complémentaires aux dents 6, à l'intérieur du corps 3 de l'accessoire batteur 1.

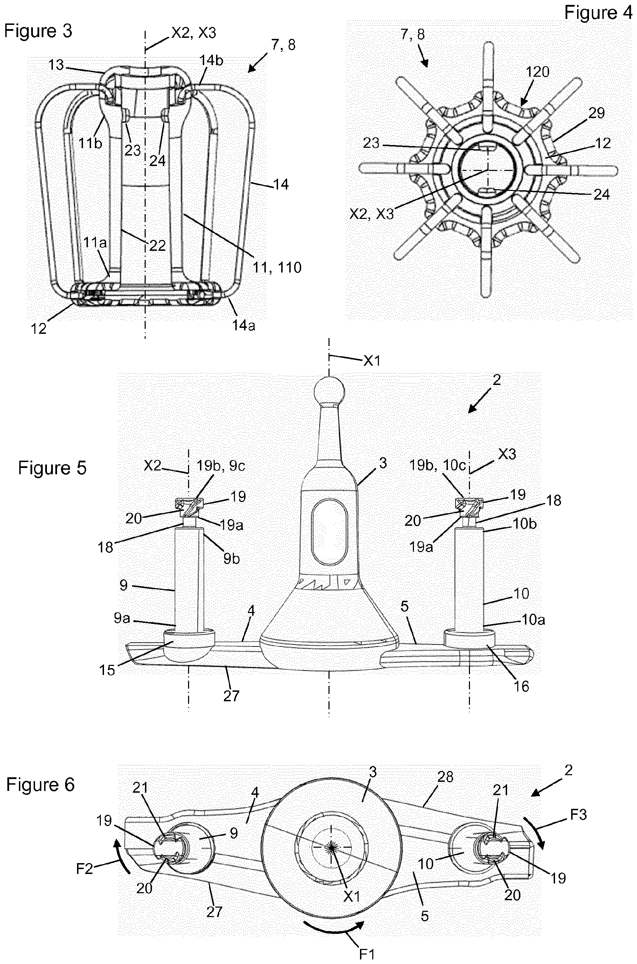

L'accessoire batteur 1 comprend également deux fouets 7, 8, d'une conception identique, qui sont montés en rotation selon deux seconds axes X2, X3, respectivement sur les deux bras 4, 5. Les seconds axes X2, X3 sont parallèles au premier axe X1 et disposés symétriquement l'un vis-à-vis de l'autre selon ce premier axe X1, comme l'illustrent les figures 1, 2, 10 et 11. La pièce d'entraînement 2 comprend deux arbres 9, 10 qui sont fixés respectivement sur les deux bras 4, 5 et qui s'étendent vers le haut, selon les deux seconds axes X2, X3, comme l'illustrent par exemple les figures 5 et 13 pour les deux variantes de l'accessoire batteur 1. Sur la variante des figures 1 à 9, le corps 3 et les bras 4, 5 sont formés d'un élément monobloc, tandis que les arbres 9, 10 sont rapportés sur les bras 4, 5. Il en est de même sur la variante des figures 10 à 14. On peut toutefois envisager des variantes pour lesquelles le corps 3, les deux bras 4, 5 et les arbres 9, 10 sont formés d'un élément monobloc.

Comme l'illustrent par exemple les figures 2, 3, 11 et 14, chaque fouet 7, 8 comprend un moyeu 11, 110 qui est monté en rotation sur l'arbre 9, 10 selon le second axe X2, X3. Chaque fouet 7, 8 comprend également une base 12 et une tête 13 prolongeant respectivement les extrémités inférieure 11a et supérieure 11b du moyeu 11, 110. La base 12 est partiellement annulaire et elle est disposée au-dessus et à distance du bras 4, 5, comme le montrent notamment les figures 1 et 2. Des brins 14, par exemple au nombre de huit, sont uniformément répartis autour du moyeu 11, 110, les extrémités inférieure 14a et supérieure 14b de ces brins 14 étant respectivement assemblées avec la base 12 et avec la tête 13.

Comme l'illustrent par exemple les figures 5 et 13, deux plots cylindriques 15, 16 sont agencés respectivement sur les bras 4, 5, selon les seconds axes X2, X3, ces plots cylindriques 15, 16 constituant des épaulements aux extrémités inférieures 9a, 10a des arbres 9, 10. Comme l'illustrent par exemple les figures 3 et 14, la base 12 des fouets 7, 8 comprend un logement cylindrique 17, d'un diamètre légèrement supérieur à celui des plots cylindriques 15, 16. Lorsque les moyeux 11, 110 des fouets 7, 8 sont engagés respectivement sur les arbres 9, 10, les logements cylindriques 17 réceptionnent les plots cylindriques 15, 16 et viennent en butée sur ceux-ci, ce qui limite la translation vers le bas, selon les seconds axes X2, X3, des fouets 7, 8 vis-à-vis de la pièce d'entraînement 2. Ainsi chacun des plots cylindriques 15, 16 forme un élément de butée agencé sur la pièce d'entraînement 2 pour bloquer la translation du moyeu 11 ou de l'autre moyeu 110 dans un premier sens selon le second axe de rotation.

Sur la variante des figures 1 à 9, les parties supérieures 9b, 10b des arbres 9, 10 comprennent chacune une gorge 18 formant au-dessus de celle-ci une tête 19. Chaque tête 19 comprend deux rainures hélicoïdales 20, 21 qui débouchent du côté inférieur 19a de ladite tête 19, sur la gorge 18, et du côté supérieur 19b de ladite tête 19, sur l'extrémité supérieure 9c, 10c de l'arbre 9, 10, comme le montrent les figures 5 et 6. Le moyeu 11, 110 du fouet 7, 8 comprend sur sa paroi cylindrique interne 22, au niveau de son extrémité supérieure 11b, deux plots 23, 24 disposés en vis-à-vis, comme le montrent les figures 3 et 4. Lors de la mise en place des fouets 7, 8 sur les arbres 9, 10, seule une position angulaire définie permet d'engager les plots 23, 24 respectivement dans les deux rainures hélicoïdales 20, 21, par le côté supérieur 19b de la tête 19. Une légère rotation du fouet 7, 8 permet ensuite aux plots 23, 24 de descendre dans les rainures hélicoïdales 20, 21 jusqu'à atteindre le côté inférieur 19a de la tête 19 et venir se loger dans la gorge 18, comme l'illustre la figure 7. Une fois la gorge 18 atteinte, le fouet 7, 8 peut tourner librement autour de l'arbre 9, 10, selon le second axe X2, X3.

Les fouets 7, 8 sont maintenus en position sur les arbres 9, 10 grâce à ce dispositif de maintien précité (les plots 23, 24, les rainures hélicoïdales 20, 21 sur la tête 19 et la gorge 18), puisque seule une manipulation déterminée consistant à effectuer une traction vers le haut et une légère rotation du fouet 7, 8 jusqu'à ce que les plots 23, 24 correspondent avec les rainures hélicoïdales 20, 21 sur le côté inférieur 19a de la tête 19 permet de dégager le fouet 7, 8 de l'arbre 9, 10. En effet, la pièce d'entraînement 2 tourne dans le sens de la flèche F1, illustrée en figure 6, qui est le sens antihoraire, ce qui tend au contraire à faire tourner les fouets 7, 8 dans les sens des flèches F2, F3, illustrées en figure 6, qui est le sens horaire, du fait de l'effort exercé par la préparation alimentaire sur ces fouets 7, 8. Les rainures hélicoïdales 20, 21 sur les têtes 19 des arbres 9, 10 présentent chacune un pas à droite en regard des seconds axes X2, X3, comme le montre la figure 5 pour la rainure hélicoïdale 20. Ainsi la rotation des fouets 7, 8 et donc des plots 23, 24 sur les moyeux 11, 110 s'effectue d'une telle manière par rapport au pas à droite des rainures hélicoïdales 20, 21, que lesdits plots 23, 24 ne peuvent pas sortir des gorges 18 sur les arbres 9, 10, à moins d'effectuer ladite manipulation déterminée précitée. On comprend, qu'inversement, la mise en place des fouets 7, 8 sur les arbres 9, 10 nécessite de positionner précisément les plots 23, 24 en regard des rainures hélicoïdales 20, 21, du côté supérieur 19b de la tête 19, afin de permettre l'introduction desdits plots 23, 24 dans lesdites rainures hélicoïdales 20, 21 et leur positionnement dans la gorge 18 sous la tête 19.

Sur la variante des figures 10 à 14, les parties supérieures 9b, 10b des arbres 9, 10 comprennent chacune une gorge 18, comme l'illustre la figure 13. Cette gorge 18 reçoit une rondelle élastique 25, comme l'illustre la figure 12. Le moyeu 11, 110 du fouet 7, 8 comprend sur sa paroi cylindrique interne 22, au niveau de son extrémité supérieure 11b, une gorge interne 26. Lorsque le fouet 7, 8 est engagé sur l'arbre 9, 10, la rondelle élastique 25 se comprime légèrement, ce qui permet son introduction et celle de l'arbre 9, 10 dans le moyeu 11, 110. Une fois que la rondelle élastique 25 atteint la position de la gorge interne 26, cette rondelle élastique 25 reprend sa forme normale, ce qui bloque la translation selon le second axe X2, X3 du fouet 7, 8 sur l'arbre 9, 10. Dans cette position, les plots cylindriques 15, 16 sont positionnés dans les logements cylindriques 17 des bases 12 des fouets 7, 8. Dans cette position, les fouets 7, 8 sont maintenus sur la pièce d'entrainement 2. Une traction vers le haut, selon le second axe X2, X3, permet de comprimer légèrement la rondelle élastique 25 pour dégager le moyeu 11, 110 de l'arbre 9, 10 et extraire le fouet 7, 8. Ainsi, seule une manipulation déterminée consistant à tirer vers le haut le fouet 7, 8 permet de dégager le moyeu 11, 110 de l'arbre 9, 10. Inversement, une poussée vers le bas du fouet 7, 8 permet d'engager le moyeu 11, 110 sur l'arbre 9, 10. Ainsi le dispositif de maintien est configuré pour bloquer en translation, selon le second axe X2, X3 de rotation, le moyeu 11, 110 monté libre en rotation sur l'arbre 9, 10, quel que soit le sens de rotation du moyeu 11, 110.

Comme l'illustrent par exemple les figures 5, 6, 10 et 13, les bras 4, 5 comprennent des racloirs 27, 28 ayant chacun une forme de lame, ceux-ci permettant de racler le fond du récipient durant la rotation de l'accessoire batteur 1. Les racloirs 27, 28 sont disposés en amont des bases 12 des fouets 7, 8, par rapport au sens de rotation de la pièce d'entraînement 2 défini par la flèche F1 illustrée en figure 6. Ainsi, les racloirs 27, 28 raclent la préparation alimentaire dans le fond du récipient avant que ladite préparation alimentaire soit mélangée par les fouets 7, 8. On garantit ainsi que toute la préparation alimentaire est convenablement brassée par les fouets 7, 8.

Comme l'illustrent les figures 4 et 9, la base 12 des fouets 7, 8 comprend des moyens de mélange 120 comportant des premières ondulations 29 sur la périphérie de la base 12 et des secondes ondulations 30 sur la face inférieure 12a de ladite base 12. Ces ondulations 29, 30 sur la base 12 partiellement annulaire sont disposées au-dessus et à distance des bras 4, 5. Lors de la rotation des fouets 7, 8, ces ondulations 29, 30 assurent le mélange de la préparation alimentaire, y compris lorsqu'une faible quantité de préparation alimentaire est disposée dans le récipient de l'appareil, seule la partie inférieure 14c des brins 14 étant plongée dans la préparation alimentaire. Ces ondulations 29, 30 seront tout particulièrement efficaces lorsque la hauteur de préparation alimentaire dans le récipient n'excède pas le cinquième de la hauteur du fouet 7, 8. On peut envisager de telles ondulations sur la base 12 des fouets 7, 8 de la variante des figures 10 à 14. On peut aussi remplacer ces ondulations 29, 30 sur la base 12 des fouets 7, 8 par d'autres moyens de mélange 120, par exemple des pales ou des ailettes agencées autour et/ou en-dessous de ladite base 12.

Si désiré au moins l'un des bras 4, 5 peut présenter une partie supérieure formant une nervure longitudinale s'étendant entre le corps 3 et l'un des plots cylindriques 15, 16.

La description précédente des deux variantes de réalisation de l'accessoire batteur 1 selon l'invention met en exergue la facilité de montage et de démontage des fouets 7, 8 sur les arbres 9, 10 de la pièce d'entraînement 2, la présence d'un dispositif de maintien assurant le blocage en translation des fouets 7, 8 sur ces arbres 9, 10, selon les seconds axes X2, X3.

La présence des moyens de mélange sur la base 12 des fouets 7, 8 offre une efficacité de brassage de faibles quantités de préparations alimentaires disposées dans le récipient de l'appareil.

Bien entendu, des variantes de réalisation restent envisageables sans sortir du cadre de l'invention. On peut notamment prévoir un seul fouet 7 sur l'accessoire batteur 1. On peut aussi prévoir deux fouets 7, 8 sur l'accessoire batteur 1, mais en disposant les seconds axes X2, X3 à des distances différentes vis-à-vis du premier axe X1. On peut aussi prévoir au moins un fouet additionnel sur l'accessoire batteur 1 en complément des fouets 7, 8, avantageusement monté libre en rotation sur la pièce d'entraînement 2 selon un axe de rotation additionnel distinct, si désiré sur un bras additionnel de la pièce d'entraînement 2. On peut aussi prévoir de remplacer les brins 14 sur les fouets 7, 8 par des pales ou des ailettes.

## Revendications

1. Accessoire batteur (1) pour un appareil électroménager de préparation culinaire, l'accessoire batteur (1) comprenant une pièce d'entraînement (2) munie d'un premier axe (X1) de rotation et d'au moins un bras (4, 5), l'accessoire batteur (1) comprenant au moins un fouet (7, 8), le ou chaque fouet (7, 8) étant monté libre en rotation sur le ou sur l'un des bras (4, 5) selon un second axe (X2, X3) de rotation excentré par rapport au premier axe (X1) de rotation, le ou l'un au moins des fouet(s) (7, 8), de préférence le ou chaque fouet (7, 8), comprenant une base (12) munie de moyens de mélange (120) évoluant au-dessus et à distance dudit au moins un bras (4, 5) lors de la rotation dudit au moins un fouet (7, 8), **caractérisé en ce que** la base (12) est au moins partiellement annulaire et **en ce que** les moyens de mélange (120) comprennent des ondulations (29, 30) réparties autour et/ou en-dessous de la base (12), pour favoriser le brassage et l'émulsion d'une faible quantité de préparation alimentaire.

2. Accessoire batteur (1) selon la revendication 1, **caractérisé en ce qu'**il comprend deux fouets (7, 8) et **en ce que** la pièce d'entraînement (2) est munie de deux bras (4, 5), chacun des fouets (7, 8) étant respectivement monté libre en rotation sur l'un des bras (4, 5) selon l'un des seconds axes (X2, X3) de rotation.

3. Accessoire batteur (1) selon la revendication 2, **caractérisé en ce que** les deux fouets (7, 8) sont disposés symétriquement l'un par rapport à l'autre, vis-à-vis du premier axe (X1) de rotation.

4. Accessoire batteur (1) selon l'une des revendications 1 à 3, **caractérisé en ce que** la pièce d'entraînement (2) comprend un corps (3) agencé selon le premier axe (X1) de rotation, et **en ce que** le ou les bras (4, 5) s'étendent radialement vis-à-vis du corps.

5. Accessoire batteur (1) selon la revendication 4, **caractérisé en ce que** le ou l'un au moins des bras (4, 5), de préférence chacun des bras (4, 5), comprend un racloir (27, 28) disposé du côté amont de la base (12) par rapport au sens de rotation de la pièce d'entraînement (2).

6. Accessoire batteur (1) selon l'une des revendications 4 ou 5, **caractérisé en ce que** le corps (3) comprend une forme en cloche creuse s'étendant vers le haut selon le premier axe (X1) de rotation.

7. Accessoire batteur (1) selon l'une des revendications 4 à 6, **caractérisé en ce que** le corps (3) comprend des moyens d'accouplement.

8. Accessoire batteur (1) selon l'une des revendications 1 à 7, **caractérisé en ce que** le ou chaque fouet (7, 8) comprend des brins (14) répartis autour dudit fouet (7, 8) et se terminant en partie inférieure par la base (12).

9. Accessoire batteur (1) selon l'une des revendications 1 à 8, **caractérisé en ce que** la pièce d'entraînement (2) comprend au moins un arbre (9, 10) s'étendant selon le ou l'un des second(s) axe(s) (X2, X3) de rotation, et **en ce que** le ou chaque fouet (7, 8) comprend un moyeu (11, 110) monté libre en rotation sur le ou sur l'un des arbre(s) (9, 10), le moyeu (11, 110) comportant ladite base (12).

10. Accessoire batteur (1) selon la revendication 9 rattachée à la revendication 4, **caractérisé en ce que** le ou chaque arbre (9, 10) s'étend vers le haut sur le ou l'un des bras (4, 5).

11. Accessoire batteur (1) selon l'une des revendications 9 ou 10, **caractérisé en ce qu'**un dispositif de maintien est configuré pour bloquer en translation, selon le second axe (X2, X3) de rotation, le moyeu (11, 110) monté libre en rotation sur le ou sur l'un des arbre(s) (9 ; 10), au moins lorsque le moyeu (11 ; 110) tourne selon un premier sens de rotation, et pour autoriser le retrait du fouet (7, 8) de l'arbre (9, 10) lorsque le fouet (7, 8) est manipulé d'une manière définie par rapport à l'arbre (9, 10).

12. Accessoire batteur (1) selon la revendication 11, **caractérisé en ce que** le dispositif de maintien comprend :
- un élément de butée agencé sur la pièce d'entraînement (2) pour bloquer la translation du moyeu (11, 110) dans un premier sens selon le second axe (X2, X3) de rotation,
- une gorge (18) agencée sur l'arbre (9, 10),
- une gorge interne (26) agencée sur le moyeu (11, 110),
- et une rondelle élastique (25) s'engageant dans la gorge (18) et formant un élément de blocage de la translation du moyeu (11, 110) dans un second sens selon ce second axe (X2, X3) de rotation, une fois en position dans la gorge interne (26).

13. Accessoire batteur (1) selon la revendication 11, **caractérisé en ce que** le dispositif de maintien comprend :
- une tête (19) et une gorge (18) agencées sur l'arbre (9, 10), la gorge étant positionnée sous la tête, ladite tête comprenant au moins une rainure hélicoïdale (20, 21) débouchant d'un côté sur la gorge et de l'autre sur une extrémité supérieure (9c, 10c) de l'arbre,
- au moins un plot (23, 24) agencé à l'intérieur du moyeu (11, 110) et configuré pour pénétrer dans l'au moins une rainure hélicoïdale (20, 21) et venir se loger dans la gorge (18) lors de la mise en place du moyeu sur l'arbre (9, 10).

14. Accessoire batteur (1) selon la revendication 13, **caractérisé en ce que** le dispositif de maintien comprend deux rainures hélicoïdales (20, 21) et deux plots (23, 24), les plots (23, 24) s'engageant respectivement dans les rainures hélicoïdales (20, 21) pour venir se loger dans la gorge (18).

15. Appareil électroménager de préparation culinaire comprenant un dispositif d'entraînement en rotation, un récipient de travail et un accessoire batteur (1) apte à être entraîné en rotation dans le récipient de travail par le dispositif d'entraînement en rotation, **caractérisé en ce que** l'accessoire batteur (1) est conforme à l'une au moins des revendications 1 à 11, ou bien à la revendication 12, ou bien à l'une au moins des revendications 13 ou 14 et **en ce que** l'accessoire batteur (1) est apte à être entraîné en rotation dans le récipient de travail par le dispositif d'entraînement en rotation selon le premier axe (X1) de rotation.

## Patentansprüche

1. Mixerzubehör (1) für ein Haushaltsgerät zur Nahrungsmittelzubereitung, wobei das Mixerzubehör (1) ein Antriebsteil (2) umfasst, das mit einer ersten Drehachse (X1) und mit mindestens einem Arm (4, 5) versehen ist, wobei das Mixerzubehör (1) mindestens einen Schneebesen (7, 8) umfasst, wobei der oder jeder Schneebesen (7, 8) frei drehend auf dem oder einem der Arme (4, 5) entlang einer zweiten Drehachse (X2, X3), die in Bezug auf die erste Drehachse (X1) exzentrisch ist, montiert ist, wobei der oder mindestens einer der Schneebesen (7, 8), bevorzugt der oder jeder der Schneebesen (7, 8), eine Basis (12) umfasst, die mit Mischmitteln (120) versehen ist, die sich bei der Drehung des mindestens einen Schneebesens (7, 8) oberhalb und in einem Abstand von dem mindestens einen Arm (4, 5) bewegen, **dadurch gekennzeichnet, dass** die Basis (12) mindestens teilweise ringförmig ist, und dass die Mischmittel (120) Riffelungen (29, 30) umfassen, die um und/oder unter der Basis (12) verteilt sind, um das Rühren und die Emulsion einer kleinen Lebensmittelzubereitungsmenge zu fördern.

2. Mixerzubehör (1) nach Anspruch 1, **dadurch gekennzeichnet, dass** es zwei Schneebesen (7, 8) umfasst, und dass das Antriebsteil (2) mit zwei Armen (4, 5) versehen ist, wobei jeder der Schneebesen (7, 8) jeweils frei in Drehung auf einem der Arme (4, 5) entlang einer der zweiten Drehachsen (X2, X3) montiert ist.

3. Mixerzubehör (1) nach Anspruch 2, **dadurch gekennzeichnet, dass** die zwei Schneebesen (7, 8) zueinander symmetrisch gegenüber der ersten Drehachse (X1) angeordnet sind.

4. Mixerzubehör (1) nach einem der Ansprüche 1 bis 3, **dadurch gekennzeichnet, dass** das Antriebsteil (2) einen Körper (3) umfasst, der entlang der ersten Drehachse (X1) eingerichtet ist, und dass sich der Arm oder die Arme (4, 5) radial gegenüber dem Körper erstrecken.

5. Mixerzubehör (1) nach Anspruch 4, **dadurch gekennzeichnet, dass** der Arm oder mindestens einer der Arme (4, 5), bevorzugt jeder der Arme (4, 5) einen Abstreifer (27, 28) umfasst, der auf der stromaufwärtigen Seite der Basis (12) in Bezug auf die Drehrichtung des Antriebsteils (2) angeordnet ist.

6. Mixerzubehör (1) nach einem der Ansprüche 4 oder 5, **dadurch gekennzeichnet, dass** der Körper (3) eine hohle Glockenform umfasst, die sich entlang der ersten Drehachse (X1) nach oben erstreckt.

7. Mixerzubehör (1) nach einem der Ansprüche 4 bis 6, **dadurch gekennzeichnet, dass** der Körper (3) Kopplungsmittel umfasst.

8. Mixerzubehör (1) nach einem der Ansprüche 1 bis 7, **dadurch gekennzeichnet, dass** der oder jeder Schneebesen (7, 8) Stränge (14) umfasst, die um den Schneebesen (7, 8) verteilt sind und in einem unteren Teil in der Basis (12) enden.

9. Mixerzubehör (1) nach einem der Ansprüche 1 bis 8, **dadurch gekennzeichnet, dass** das Antriebsteil (2) mindestens eine Welle (9, 10) umfasst, die sich entlang der zweiten Drehachse oder zweiten Drehachsen (X2, X3) erstreckt, und dass der oder jeder Schneebesen (7, 8) eine Nabe (11, 110) umfasst, die in Drehung frei auf der oder einer der Welle(n) (9, 10) montiert ist, wobei die Nabe (11, 110) die Basis (12) umfasst.

10. Mixerzubehör (1) nach Anspruch 9, der mit Anspruch 4 verbunden ist, **dadurch gekennzeichnet, dass** sich die oder jede Welle (9, 10) nach oben auf dem Arm oder einem der Arme (4, 5) erstreckt.

11. Mixerzubehör (1) nach Anspruch 9 oder 10, **dadurch gekennzeichnet, dass** eine Haltevorrichtung dazu konfiguriert ist, die Nabe (11, 110), die frei in Drehung auf der oder einer der Wellen (9; 10) montiert ist, entlang der Drehachse (X2, X3) in Verschiebung mindestens zu blockieren, wenn sich die Nabe (11; 110) in einer ersten Drehrichtung dreht, und um das Abziehen des Schneebesens (7, 8) von der Welle (9, 10) zu gestatten, wenn der Schneebesen (7, 8) in einer in Bezug auf die Welle (9, 10) definierten Weise gehandhabt wird.

12. Mixerzubehör (1) nach Anspruch 11, **dadurch gekennzeichnet, dass** die Haltevorrichtung Folgendes umfasst:
- ein Anschlagelement, das auf dem Antriebsteil (2) eingerichtet ist, um die Verschiebung der Nabe (11, 110) in einer ersten Richtung entlang der zweiten Drehachse (X2, X3) zu blockieren,
- eine Nut (18), die auf der Welle (9, 10) eingerichtet ist,
- eine Innennut (26), die auf der Nabe (11, 110) eingerichtet ist,
- eine Federscheibe (25), die sich in die Nut (18) fügt und ein Blockierelement der Verschiebung der Nabe (11, 110) in einer zweiten Richtung entlang dieser zweiten Drehachse (X2, X3) blockiert, sobald sie in der Innennut (26) in Position ist.

13. Mixerzubehör (1) nach Anspruch 11, **dadurch gekennzeichnet, dass** die Haltevorrichtung Folgendes umfasst:
- einen Kopf (19) und eine Nut (18), die auf der Welle (9, 10) eingerichtet sind, wobei die Nut unter dem Kopf positioniert ist, wobei der Kopf mindestens eine schraubenförmige Hohlkehle (20, 21) umfasst, die auf einer Seite auf der Nut und auf der anderen auf einem oberen Ende (9c, 10c) der Welle mündet,
- mindestens einen Klotz (23, 24), der in dem Inneren der Nabe (11, 110) eingerichtet und dazu konfiguriert ist, in mindestens eine schraubenförmige Hohlkehle (20, 21) einzudringen und sich bei der Einrichtung der Nabe auf der Welle (9, 10) in die Nut (18) fügen.

14. Mixerzubehör (1) nach Anspruch 13, **dadurch gekennzeichnet**, das die Haltevorrichtung zwei schraubenförmige Hohlkehlen (20, 21) und zwei Klötze (23, 24) umfasst, wobei sich die Klötze (23, 24) jeweils in die schraubenförmigen Hohlkehlen (20, 21) zu fügen, um in der Nut (18) zu sitzen.

15. Haushaltsgerät zur Lebensmittelzubereitung, dass eine Drehantriebsvorrichtung, einen Arbeitsbehälter und ein Mixerzubehör (1) umfasst, das dazu geeignet ist, in Drehung in dem Arbeitsbehälter von der Drehantriebsvorrichtung angetrieben zu werden, **dadurch gekennzeichnet, dass** das Mixerzubehör (1) mindestens einem der Ansprüche 1 bis 11 oder Anspruch 12 oder mindestens einem der Ansprüche 13 oder 14 entspricht, und dass das Mixerzubehör (1) dazu geeignet ist, in Drehung in dem Arbeitsbehälter von der Drehantriebsvorrichtung entlang der ersten Drehachse (X1) angetrieben zu sein.

## Claims

1. A whisking accessory (1) for a household food preparation appliance, the whisking accessory (1) comprising a drive part (2) provided with a first rotation axis (X1) and with at least one arm (4, 5), the whisking accessory (1) comprising at least one beater (7, 8), the or each beater (7, 8) being mounted in a freely rotatable manner on the or one of the arms (4, 5) according to a second rotation axis (X2, X3) eccentric with respect to the first rotation axis (X1), the or at least one of the beaters (7, 8), preferably the or each beater (7, 8), comprising a base (12) provided with mixing means (120) moving above and at a distance from said at least one arm (4, 5) during the rotation of said at least one beater (7, 8), **characterised in that** the base (12) is at least partially annular and **in that** the mixing means (120) comprise corrugations (29, 30) distributed around and/or below the base (12), to promote the stirring and the emulsion of a small food preparation amount.

2. The whisking accessory (1) according to claim 1, **characterised in that** it comprises two beaters (7, 8) and **in that** the drive part (2) is provided with two arms (4, 5), each of the beaters (7, 8) being respectively mounted in a freely rotatable manner on one of the arms (4, 5) along one of the second rotation axes (X2, X3).

3. The whisking accessory (1) according to claim 2, **characterised in that** both beaters (7, 8) are symmetrically disposed with respect to each other, relative to the first rotation axis (X1).

4. The whisking accessory (1) according to one of claims 1 to 3, **characterised in that** the drive part (2) comprises a body (3) arranged along the first rotation axis (X1), and **in that** the at least one arm (4, 5) extends radially relative to the body.

5. The whisking accessory (1) according to claim 4, **characterised in that** the or at least one of the arms (4, 5), preferably each of the arms (4, 5), comprises a scraper (27, 28) disposed on the upstream side of the base (12) with respect to the rotation direction of the drive part (2).

6. The whisking accessory (1) according to one of claims 4 or 5, **characterised in that** the body (3) comprises a hollow bell shape extending upwards along the first rotation axis (X1).

7. The whisking accessory (1) according to one of claims 4 to 6, **characterised in that** the body (3) comprises coupling means.

8. The whisking accessory (1) according to one of claims 1 to 7, **characterised in that** the or each beater (7, 8) comprises strands (14) distributed around the said beater (7, 8) and terminating in the lower part with the base (12).

9. The whisking accessory (1) according to one of claims 1 to 8, **characterised in that** the drive part (2) comprises at least one shaft (9, 10) extending along the or one of the second rotation axes (X2, X3), and **in that** the or each beater (7, 8) comprises a hub (11, 110) mounted in a freely rotatable manner on the or one of the shafts (9, 10), the hub (11, 110) having said base (12).

10. The whisking accessory (1) according to claim 9 connected to claim 4, **characterised in that** the or each shaft (9, 10) extends upwards on the or one of the arms (4, 5).

11. The whisking accessory (1) according to one of claims 9 or 10, **characterised in that** a holding device is configured to block in translation, along the second rotation axis (X2, X3), the hub (11, 110) mounted in a freely rotatable manner on the or one of the shafts (9; 10), at least when the hub (11; 110) rotates in a first rotation direction, and to allow the beater (7, 8) of being removed from the shaft (9, 10) when the beater (7, 8) is manipulated in a defined manner with respect to the shaft (9, 10).

12. The whisking accessory (1) according to claim 11, **characterised in that** the holding device comprises:
- a stop element arranged on the drive part (2) to block the translation of the hub (11, 110) in a first direction along the second rotation axis (X2, X3),
- a groove (18) arranged on the shaft (9, 10),
- an inner groove (26) arranged on the hub (11, 110),
- and an elastic washer (25) engaging in the groove (18) and forming an blocking element for the translation of the hub (11, 110) in a second direction along this second rotation axis (X2, X3), once in position in the inner groove (26).

13. The whisking accessory (1) according to claim 11, **characterised in that** the holding device comprises:
- a head (19) and a groove (18) arranged on the shaft (9, 10), the groove being positioned under the head, said head comprising at least one helical slot (20, 21) leading to one side onto the groove and to the other side onto an upper end (9c, 10c) of the shaft,
- at least one stud (23, 24) arranged inside the hub (11, 110) and configured to penetrate the at least one helical slot (20, 21) and to be accommodated in the groove (18) when positioning the hub on the shaft (9, 10).

14. The whisking accessory (1) according to claim 13, **characterised in that** the holding device comprises two helical slots (20, 21) and two studs (23, 24), the studs (23, 24) engaging respectively in the helical slots (20, 21) to be accommodated in the groove (18).

15. A household food preparation appliance comprising a rotary drive device, a working receptacle and a whisking accessory (1) able to be driven in rotation in the working receptacle by the rotary drive device, **characterised in that** the whisking accessory (1) complies with at least one of claims 1 to 11, or with claim 12, or with at least one of claims 13 or 14 and **in that** the whisking accessory (1) is able of being driven in rotation in the working receptacle by the rotation drive device along the first rotation axis (X1).
